# EUROPEAN PATENT APPLICATION

(11) **EP 2 361 887 A1**
(43) Date of publication of application: **31.08.2011**
(21) Application number: 10305191.8
(22) Date of filing: 25.02.2010
(51) Int. Cl.: C01G 9/00, C01G 9/02

(54) **A process for manufacturing a doped or non-doped zno material and said material**

(71) Applicant: Corning Incorporated, Corning NY 14831 (US)
(72) Inventor: Guzman, Guillaume, 77250 Veneux-Les Sablons (FR); Marudhachalam, Panneerselvam, 77870 Vulaines Sur Seine (FR); Francois, Eric, 77810 Thomery (FR)
(74) Representative: Le Roux, Martine

(57) **Abstract**

The present invention mainly relates to a process for manufacturing a doped or non-doped ZnO material and to the doped or non-doped ZnO material obtainable by said process. Said material shows very interesting thermoelectric properties. Said process comprises:
a) mixing powders of ZnO, of at least one oxide of doping element, if any, and of at least one solid pore forming agent, said at least one solid pore forming agent, suitable to generate an open porosity, being used in a ratio, with regard to ZnO and the at least one oxide of doping element, if any, of at least 5 wt. % and having a mean size of at least 10 µm, to obtain a mixture,
b) forming said mixture to obtain a formed green body,
c) heat treating said formed green body to obtain a porous sintered body, showing an open porosity, and
d) annealing said porous sintered body in an inert or reducing atmosphere.

## Description

### FIELD OF THE INVENTION

The present invention relates to a process for manufacturing a doped or non-doped ZnO material, to the material obtainable by said process and to the use of said material as an n-type thermoelectric material.

The process of the invention allows the preparation of a new material showing very interesting thermoelectric properties, more particularly a favorably high electrical conductivity and a favorably low thermal conductivity. Said process supplies a porous zinc oxide material suitable as a thermoelectric material.

### BACKGROUND OF THE INVENTION

Thermoelectric materials are those who - when a bulk body of the material is assembled in a thermoelectric module - are able to generate electricity from heat. Challenges to produce cost-effective devices which can be used in a variety of applications are numerous. In particular, for high temperature operation of modules, chemically and thermally stable materials are demanded. Another challenge to be addressed is the optimization of physical properties that characterize the thermoelectric material, which are Seebeck coefficient, thermal conductivity and electrical conductivity. Electrical conductivity is very sensitive to material design including chemical composition, structural defects doping, microstructure and porosity. A good thermoelectric material has high electrical conductivity, high Seebeck coefficient and low thermal conductivity. These three properties are intrinsically correlated and then it is very difficult to improve them independently. The non-dimensional figure of merit ZT = TS²(σ/κ, where S is Seebeck coefficient, σ is electrical conductivity and κ is thermal conductivity (T being temperature), defines the thermoelectric properties of a material. ZT has to be the highest possible and cost compatible with the desired application.

Zinc oxide (ZnO) based materials are among the best thermoelectric oxides but one of the problems is that thermal conductivity is relatively high which limits the maximization of ZT. Introducing nanoporous structure (as illustrated in US 5 525 162) is not enough to increase ZT. Others have also disclosed improved thermoelectric properties of ZnO such as JP-A-2007-246294, JP-A-2006-347861 and US-A- 2007/0240749.

The optimization of the thermoelectric properties of ZnO based materials is thus still a challenge.

### THE INVENTION

The first object of the present invention consists in a process for manufacturing a new doped or non-doped bulk ZnO material, with improved thermoelectric properties.

Said process includes three main steps: 1) mixing powders and forming the resulting mixture, then, 2) heat treating said formed mixture of powders and 3) annealing in an inert or reduced atmosphere.

The first object of the present invention more precisely consists in a process for manufacturing a ZnO material containing no doping element or a ZnO based material containing at least one doping element. Characteristically, said process comprises:
a) mixing powders of ZnO, of at least one oxide of doping element, if any, and of at least one solid pore forming agent, said at least one solid pore forming agent, suitable to generate an open porosity, being used in a ratio, with regard to ZnO and the at least one oxide of doping element, if any, of at least 5 wt. % and having a mean size of at least 10 µm, to obtain a mixture,
b) forming said mixture to obtain a formed green body,
c) heat treating said formed green body to obtain a porous sintered body, showing an open porosity, and
d) annealing said porous sintered body in an inert or reducing atmosphere.
   - With reference to step a) of said process, the following is hereafter developed in a non limitative way.

ZnO is the basic constitutive element of the final material.

ZnO can be used as the single oxide to obtain a final non-doped ZnO material. At high temperature, such a final non-doped ZnO material is advantageously used in a non oxidizing (closed) atmosphere.

ZnO is however generally used with at least one oxide of doping element, in view of manufacturing a doped ZnO material. So, at least one oxide of doping element is also generally used as starting material (at least one oxide of doping element is so present in the prepared mixture). The corresponding powder(s) is(are) mixed with the ZnO powder. The at least one doping element is used in a conventional amount. The starting powders mixture so generally contains at least one oxide of doping element, said at least one oxide of doping element being generally present in an amount such that said mixture contains the at least one doping element in a ratio up to 10 atom. %, advantageously in a ratio from 0.1 to 10 atom. %, with regard to Zn. The skilled person knows that the added quantity(ies) of oxide(s) can equally be expressed as atom. % or as weight %. Said quantity(ies) is(are) in excess or in substitution to the matrix or host material. In the present case, matrix or host material is typically ZnO. The oxides of doping elements able to be mixed with ZnO, according to step a) of the process of the invention, can be selected from the group consisting in the oxides of Al, Ce, B, Zr, Ti, Ni, Sn, Fe, Ge, Ga, Mn and combinations thereof. Said list is in no way limitative.

Advantageously, the mixture, prepared according to said step a) of the process of the invention, contains Al₂O₃ and at least one other oxide of doping element, said at least one other oxide of doping element being very advantageously selected from the group consisting in the oxides of Ce, B, Zr, Ti, Ni, Sn, Fe, Ge, Ga, Mn and combinations thereof.

According to preferred variants, said mixture contains Al₂O₃ and CeO₂ or Al₂O₃ and Ga₂O₃. According to said preferred variants, the ZnO material manufactured according to the process of the invention is a ZnO material doped with Al and Ce or with Al and Ga.

In a manner known *per se,* the doping element(s) (added as oxide(s)) will be incorporated into the crystalline structure of the ZnO material by substitution or as interstitial element or by reaction with the matrix to form a secondary phase (that is dispersed in said matrix) or as non reacting oxide grain (also dispersed in the matrix).

The mixture prepared in step a) includes at least one solid pore forming agent. Said at least one solid pore forming agent is suitable to create a highly porous material with connected macropores.

Said at least one solid pore forming agent is used in a high amount: in a ratio, with regard to ZnO and the at least one oxide of doping element, if any, of at least 5 wt. %. It is generally used in the above defined ratio of 8-70 wt%, advantageously of 8-50 wt. %. Typically, it is used in the above defined ratio of 8-25 wt. %. It is actually used in a ratio suitable to the preparation of a final material showing an open porosity of at least 10% in volume, an open porosity of generally 10-70 % in volume, advantageously of 20-50 % in volume.

Said at least one solid pore forming agent shows a great mean size: of at least 10 µm. Said mean size (equivalent diameter) is generally between 10 and 500 µm, advantageously between 20 and 200 µm. It is so clear that the used at least one pore forming agent is not used, according to the invention, to create nanopores. The above given values of mean size (equivalent diameter) of the pore forming agent(s) quantify the notions of "macropore", of "macroporosity", used in the present specification. The aimed material is intended to have pores with the corresponding size: a mean size of at least 10 µm, generally of between 10 and 500 µm, advantageously of between 20 and 200 µm. It has here to be noted that the size of the at least one pore forming agent(s), hence the size of the pores of the porous manufactured (doped or non-doped) ZnO material, is not at all strictly limited insofar as it is a relative value. If a large body is manufactured, said body may include large pores, without having its mechanical properties seriously weakened. So the at least one solid pore forming agent has a mean size of at least 10 µm (to generate macropores, in the sense of the invention) and is actually able to have a far greater mean size.

Said at least one solid pore forming agent is able to generate an open porosity. It generally shows an adapted geometry: *a priori* not a perfect spherical geometry. Note that interconnected pores (an open porosity) are(is) easily generated in the present context, in view of the amounts and sizes of at least one pore forming agent used (which conventionally disappears upon the action of heat: in step c) of the process of the invention).

Said at least one solid pore forming agent can be any solid pore forming agent conventionally used in processes for preparing ceramics. It advantageously consists in potato starch, graphite, sugar and mixtures thereof. Very advantageously, potato starch or(and) graphite is(are) used as pore forming agent.

Said at least one solid pore forming agent is a key of the process of the invention. Thanks to its action, developed during the heat treatment (step c) of the process of the invention), a macroporous structure (having a high open porosity) is generated. Said macroporous structure:
1) allows obtaining a final macroporous doped or non-doped ZnO material showing a low thermal conductivity, hence improved thermoelectric properties, ; and
2) allows the annealing treatment (step d) of the process of the invention) to be efficient in reduced time (the gas diffusion inside the macroporous structure is facilitated ; oxygen loss and/or oxygen redistribution inside the crystalline structure is allowed).

It has here to be noted that it was not at all predictable to be able to obtain such a macroporous structure, which is neither brittle, nor friable and that the synergy developed by the two features - macroporous high open porosity + annealing treatment - with regard the thermoelectric properties of the final material is quite surprising.
- With reference to step b) of the process of the invention, the following is hereafter developed in a non limitative way.

The mixture of powders (ZnO + at least one oxide of doping element, if any + at least one pore forming agent) is formed, generally pressed according to a single axis. A shape is given to said mixture. Any conventional forming method can be carried out, generally with a processing aid, such as a liquid organic binder, added to the mixture of powders.

The following conventional forming processes can be carried out: injection molding, extrusion, isostatic pressing, slip casting, roll compaction or tape casting. Said list is in no way exhaustive.

At the end of said step b) of the process of the invention, a formed green body is obtained.
- With reference to step c) of the process of the invention, the following is hereafter developed in a non limitative way.

The green body is fired according to said step c) to have both the at least one solid pore forming agent present developing its action and the powders to be sintered, so as to obtain a porous sintered body (a ceramic) having an open porosity.

The green body is fired, in air or oxygen, according to a thermal cycle, which successively allows:
- firstly, at "low temperatures" (above 500°C, generally above 600°C), the at least one pore forming agent present to burn, thereby generating the expected open macroporosity ; and
- secondly, at higher temperature (higher than 600°C, generally higher than 750°C, typically at 1350°C), the porous material to be sintered. The crystalline phases are generated. A ceramic is obtained.

Such a heat treatment is *per se* known. According to the invention, it is characteristically carried out with specific raw materials (ZnO and at least one oxide of doping element, if any) and with at least one solid pore forming agent, suitable to generate an open porosity, of high size and present in large quantity.
- With reference to step d) of the process of the invention, the following is hereafter developed in a non limitative way.

Characteristically, the obtained porous sintered body is annealed in an inert or reducing atmosphere.

An inert or reducing atmosphere refers to a non-oxygen containing atmosphere. Advantageously, the annealing (step d) of the process of the invention) is carried out in an N₂, Ar and/or H₂ atmosphere. Very advantageously, it is carried out in an N₂ or Ar/H₂ atmosphere. Preferably, it is carried out in an N₂ atmosphere.

The annealing under inert or reducing atmosphere is carried out at a suitable temperature to have an effect on the structure of the material. Said suitable temperature has not to be excessive, so as to avoid an unacceptable weakening of the material. The annealing is generally carried out at a temperature lower than 1100°C. It is generally carried out at a temperature higher than 600°C, advantageously at a temperature higher than 750°C, very advantageously at a temperature equal or superior to 800°C. It is typically carried out at a temperature of 800°C or at temperature of 1000°C.

The annealing is the second key of the process of the invention. The inventors have quite surprisingly observed that the material obtained after the annealing (in inert or reducing atmosphere) has improved thermoelectric properties compared to that not treated in inert or reducing atmosphere. The inventors have observed that the annealing carried out on the macroporous structure showing an open porosity (obtained at the end of step c) of the process of the invention) implies a great increasing of the electrical conductivity of the material. It also implies a change of colour of the material.

Thus, the annealing leaves a signature on the material, which is responsible for the improvement of the electrical conductivity.

Such a signature, according to the inventors' knowledge, is a modification of the oxygen content and/or the oxygen distribution within the material. The annealed material is deficient in oxygen (with regard to the corresponding doped or non-doped ZnO) and/or it shows a oxygen redistribution (with regard to the one of the corresponding doped or non-doped ZnO).

The man skilled in the art knows that such a signature can be visualized by X-Ray Photoelectronic Spectroscopy (XPS).

The above described process of the invention is particularly interesting insofar as it allows an easy manufacturing of a very efficient thermoelectric material from ZnO (an easy manufacturing of an improved ZnO thermoelectric material, able to capture the heat in a space or in a material and to generate electricity from said heat).

The starting basic material - ZnO - is abundantly avalaible, low cost and environmentally friendly (at least more environmentally friendly than skutterudites or other non-oxide hazardous materials).

The final thermoelectric material is easy to produce and shows very interesting thermoelectric properties: favorably low thermal conductivity and favorably high electrical conductivity.

The process of the invention allows the preparation of a doped or non-doped ZnO material, with improved thermoelectric conversion efficiency, so particularly suitable for thermoelectric applications.

The second object of the present invention consists in said material. The second object of the present invention so consists in a ZnO material containing no doping element or a ZnO based material containing at least one doping element obtainable by the above described process.

Said material more particularly bears the signature of each one of steps c) and d) of the above described process of the invention.
- it shows an open porosity of at least 10% in volume, with pores having a mean size (an equivalent diameter) of at least 10 µm (said characteristic is directly linked to the as above described use of at least one solid pore forming agent);
- it is oxygen deficient and/or oxygen redistributed (with regard to the corresponding doped or non-doped ZnO) (said characteristic directly results from the annealing treatment).

Concerning the at least one doping element of said material, the following advantageous variants may be considered, independently or in combination:
- the material contains up to 10 atom.% (relative to Zn) of at least one doping element, advantageously from 0.1 to 10 atom % (relative to Zn) of at least one doping element;
- the material contains at least one doping element selected from the group consisting in Al, Ce, B, Zr, Ti, Ni, Sn, Fe, Ge, Ga, Mn and combinations thereof.
- the material contains Al and at least one other doping element, said one another doping element being advantageously selected from the group consisting in Ce, B, Zr, Ti, Ni, Sn, Fe, Ge, Ga, Mn and combinations thereof ;
- the material is doped with Al and Ce or with Al and Ga (see the above part of the specification related to the process).

Concerning the interconnected (open) macroporosity of the material of the invention, the following advantageous variants may also be considered, independently or, advantageously in combination:
- the material shows an open porosity with pores having a mean size between 10 and 500 µm, advantageously between 20 and 200 µm (the man skilled in the art knows the correlation between the size of the pores and the size of the pore forming agent used to generate said pores);
- the material shows an open porosity of 10-70% in volume, advantageously of 20-50% in volume (the man skilled in the art knows the correlation between the total volume of pores and the amount of pore forming agent(s) used) (see the above part of the specification related to the process).

The interesting thermoelectric properties of the material of the invention (resulting from the process for obtaining it; due to its open macroporosity + its original oxygen content and/or distribution) have been above indicated and are confirmed in the following examples.

So the present invention also relates to the use of said material as an active material for the generation of electric current from heat. In other words, the present invention also relates to the above described material - doped or non-doped ZnO material - as an n-type thermoelectric material.

More particularly, the present invention also relates to a thermoelectric device comprising an n-type part and a p-type part characterized in that said n-type part comprises a (doped or non-doped ZnO) material according to the invention.

It has lastly to be noted that the present invention also relates to the intermediate material, useful in the preparation of the above described material, i.e. to the intermediate material able to be obtained at the end of step c) of the above described process. Said intermediate material - a ZnO material containing no doping element or a ZnO material containing at least one doping element - is characterized by its porosity:
- an open porosity,
- of at least 10% in volume, generally of 10-70% in volume, advantageously of 20-50% in volume ; and
- with pores having a mean size (an equivalent diameter) of at least 10 µm, generally between 10 and 500 µm, advantageously between 20 and 200 µm.

The claimed invention is now illustrated, in a non limitative way, by the following examples and attached figures.

### FIGURES

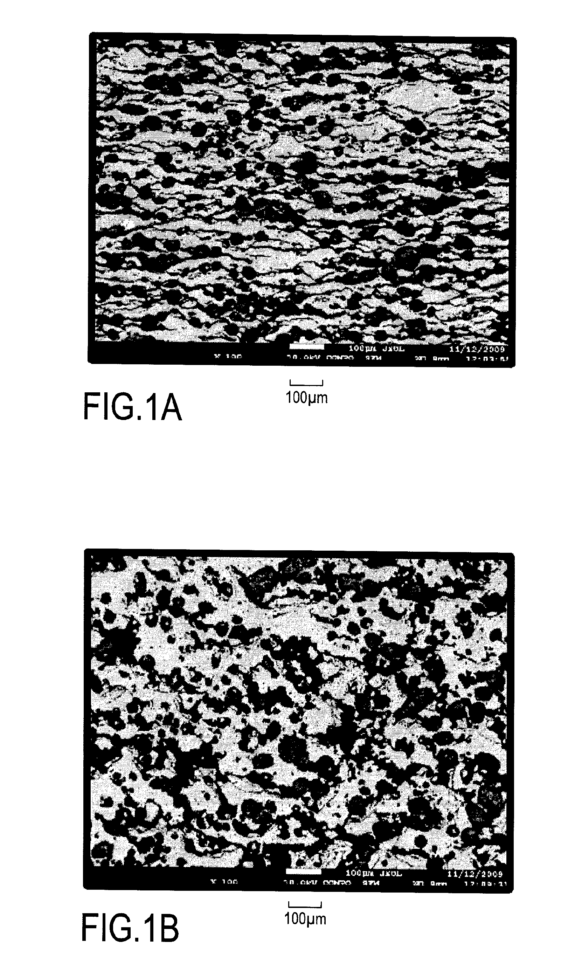

Figure 1A (a scanning electron microscopy view) shows the intermediate porous material of example 1, obtained after the heat treatment carried out in air at 1350 °C.
Figure 1B (a scanning electron microscopy view) shows the final porous material of example 1, obtained after the annealing carried out in N₂ atmosphere at 1000 °C.

### EXAMPLES

### Comparative examples A and B

### Example A (without pore forming agent and without annealing)

The following process steps are successively carried out:
a) mixing of raw materials. A molar composition of Zn₀.₉₆Al₀.₀₂Ce_{0.02}O is prepared. Zinc oxide, aluminium oxide and cerium oxide are ball milled during 30 min;
b) addition of organic binder. 0.1 weight % of an aqueous solution of Rhodoviol (10% in weight) is mixed with the above batch composition;
c) 10 g of the mixed material are pressed to 10 Tons into pellets;
d) pellets are heat treated (fired) to 20°C/h-500°C; 60°C/h-1350°C; 20h at 1350 °C; 120°C/h-30°C;
e) fired pellets are then cut into bars and discs.

The electrical conductivity and Seebeck coefficient are measured from the bars and the thermal conductivity is determined from the discs.

Figure of merit is calculated from the following formula: ZT = TS²σ/κ, where S is Seebeck coefficient, σ is electrical conductivity and κ is thermal conductivity, which define the thermoelectric properties of a material.

### Example B (with pore forming agent and without annealing)

The following process steps are successively carried out:
a) mixing of raw materials. A molar composition of Zn_{0.96}Al_{0.02}Ce_{0.02}O is prepared. Zinc oxide, aluminum oxide, cerium oxide and potato starch (10 % in weight of the total batch) (commercial potato starch is used with a mean size typically between 10 µm and 200 µm) are ball milled during 30 min;
b) addition of organic binder. 0.1 weight % of an aqueous solution of Rhodoviol (10% in weight) is mixed with the above batch composition;
c) 10 g of the mixed material are pressed to 10 Tons into pellets;
d) pellets are heat treated (fired) to 20°C/h-500°C; 60°C/h-1350°C; 20h at 1350 °C; 120°C/h-30°C;
e) fired pellets are then cut into bars and discs.

The electrical conductivity and Seebeck coefficient are measured from the bars and the thermal conductivity is determined from the discs.

Figure of merit is calculated from the following formula: ZT = TS²(σ/κ where S is Seebeck coeficient, σ is electrical conductivity and κ is thermal conductivity, which define the thermoelectric properties of a material.

Results show that porosity has a positive effect on the ZT values compared to Comparative example A.

### Examples 1 and 2

The following process steps are successively carried out:
a) mixing of raw materials. A molar composition of Zn_{0.96}Al₀.₀₂Ce_{0.02}O is prepared. Zinc oxide, aluminum oxide, cerium oxide and potato starch (10 % in weight of the total batch) (commercial potato starch is used with a mean size typically between 10 µm and 200 µm) are ball milled during 30 min;
b) addition of organic binder, 0.1 weight % of an aqueous solution of Rhodoviol (10% in weight) is mixed with the above batch composition;
c) 10 g of the mixed material are pressed to 10 Tons into pellets;
d) pellets are heat treated (fired) to 20°C/h-500°C; 60°C/h-1350°C; 20h at 1350 °C; 120°C/h-30°C;
e) fired pellets are then cut into bars and discs;
f) bars and discs are annealed at 1000°C-24h under N₂ (example 1) or at 800°C-24h under N₂ (example 2).

The electrical conductivity and Seebeck coefficient are measured from the bars and the thermal conductivity is determined from the discs.

Figure of merit is calculated from the following formula, ZT = TS²σ/κ where S is Seebeck coefficient, σ is electrical conductivity and κ is thermal conductivity, which define the thermoelectric properties of a material.

The ZT values of the so prepared bulk Zn based materials are measured to be higher than those of the Comparative examples. The described heating cycle followed by an annealing at 800°C gives a material with the highest values of ZT.

The material of the invention obtained with an annealing carried out at 1 000°C has a total macro-porosity of 40.5% (volume).

The results show the good electrical conductivity due to the annealing treatment carried out under N₂ while also showing the very low thermal conductivity resulting from the connected macroporous structure.

Figure 1A shows the porous material obtained after the heat treatment carried out in air. Figure 1B shows the final porous material obtained after the annealing of said porous material in N₂ atmosphere. The morphology of the material has clearly been modified by the annealing.

### Example 3

The process carried out is the one of example 1 (annealing at 1000 °C) with the following molar composition: Zn_{0.96}Al₀.₀₂Ga_{0.02}O. The raw materials include Al₂O₃ and Ga₂O₃.

The results show the good electrical conductivity due to the annealing treatment carried out under N₂ while also showing the very low thermal conductivity resulting from the connected macro-porous structure.

## Claims

1. A process for manufacturing a ZnO material containing no doping element or a ZnO based material containing at least one doping element, **characterized in that** it comprises:
a) mixing powders of ZnO, of at least one oxide of doping element, if any, and of at least one solid pore forming agent, said at least one solid pore forming agent, suitable to generate an open porosity, being used in a ratio, with regard to ZnO and the at least one oxide of doping element, if any, of at least 5 wt. % and having a mean size of at least 10 µm, to obtain a mixture,
b) forming said mixture to obtain a formed green body,
c) heat treating said formed green body to obtain a porous sintered body, showing an open porosity, and
d) annealing said porous sintered body in an inert or reducing atmosphere.

2. The process according to claim 1, **characterized in that** said mixture contains at least one oxide of doping element, in a ratio of said at least one doping element, with regard to Zn, up to 10 atom. %, advantageously from 0.1 to 10 atom. %.

3. The process according to claim 1 or 2, **characterized in that** said mixture contains at least one oxide of doping element selected from the group consisting in the oxides of Al, Ce, B, Zr, Ti, Ni, Sn, Fe, Ge, Ga, Mn and combinations thereof.

4. The process according to any one of claims 1 to 3, **characterized in that** said mixture contains Al₂O₃ and at least one other oxide of doping element, said at least one other oxide of doping element being advantageously selected from the group consisting in the oxides of Ce, B, Zr, Ti, Ni, Sn, Fe, Ge, Ga, Mn and combinations thereof.

5. The process according to any one of claims 1 to 4, **characterized in that** said mixture contains Al₂O₃ and CeO₂ or Al₂O₃ and Ga₂O₃.

6. The process according to any one of claims 1 to 5, **characterized in that** said at least one solid pore forming agent is used in a ratio, with regard to ZnO and the at least one oxide of doping element, if any, of 8-70 wt. %, advantageously of 8-50 wt. %.

7. The process according to any one of claims 1 to 6, **characterized in that** said at least one solid pore forming agent has a mean size between 10 and 500 µm, advantageously between 20 and 200 µm.

8. The process according to any one of claims 1 to 7, **characterized in that** potato starch or (and) graphite is (are) used as pore forming agent.

9. The process according to any one of claims 1 to 8, **characterized in that** the annealing is carried out in an N₂, Ar or/and H₂ atmosphere.

10. The process according to any one of claims 1 to 9, **characterized in that** the annealing is carried out at a temperature higher than 600°C, advantageously higher than 750 °C.

11. A ZnO material containing no doping element or a ZnO based material containing at least one doping element, obtainable by the process according to any one of claims 1 to 10.

12. The material according to claim 11, **characterized in that** it shows an open porosity of at least 10% in volume, with pores having a mean size of at least 10 µm and it is deficient in oxygen and/or oxygen redistributed.

13. The material according to claim 11 or 12, **characterized in that** it shows an open porosity with pores having a mean size between 10 and 500 µm, advantageously between 20 and 200 µm, and/or, preferably and, an open porosity of 10-70% in volume, advantageously of 20-50% in volume.

14. The material according to any one of claims 11 to 13 as an n-type thermoelectric material.

15. A ZnO material containing no doping element or a ZnO based material containing at least one doping element, **characterized in that** it shows an open porosity of at least 10% in volume, with pores having a mean size of at least 10 µm.
